# EUROPÄISCHE PATENTSCHRIFT

(11) **EP 1 107 658 B1**
(45) Veröffentlichungstag und Bekanntmachung des Hinweises auf die Patenterteilung: **12.05.2004**
(21) Anmeldenummer: 99953571.9
(22) Anmeldetag: 24.08.1999
(51) Int. Cl.: A01B 1/02

(54) **SPATEN**
SPADE
BECHE

(30) Priorität: 28.08.1998 DE 19839317
(43) Veröffentlichungstag der Anmeldung: 20.06.2001
(73) Patentinhaber: Kurz, Reinhard, 61130 Nidderau (DE)
(72) Erfinder: Kurz, Reinhard, 61130 Nidderau (DE)
(86) Internationale Anmeldenummer: PCT/DE1999/002637
(87) Internationale Veröffentlichungsnummer: WO 2000/011928

(56) Entgegenhaltungen:
- DE-C- 325 511
- FR-A- 978 582
- FR-A- 2 676 324
- US-A- 2 083 328

## Beschreibung

### HINTERGRUND DER ERFINDUNG

### 1. Feld der Erfindung

Die Erfindung betrifft einen Spaten insbesondere zum Umgraben von Bodenflächen im Garten, bestehend aus einem mit Griff versehenen Spatenschaft, an dessen unterem Ende das Spatenblatt angeordnet ist. Die Erfindung bezieht sich ferner auf neue und vorteilhafte Verbesserungen an einen solchen Spaten, um die Umgrabarbeit zu erleichtern.

### 2. Beschreibung des Standes der Technik

Spaten herkömmlicher Art sind bekannt und auch deren Handhabung und Benutzung. Belastend für den Benutzer ist dabei weniger das Einstechen des Spatenblattes in den Boden, da dies mit Bein- bzw. Fußdruck geschieht. Beschwerlich ist aber das Anheben und Ablegen des abgestochenen Bodens, was sich via entsprechender Arm-und Körperbewegung auf Dauer früher oder später insbesondere im unteren Rückenbereich bemerkbar macht. Insbesondere für Benutzer mit Rückenbeschwerden oder auch für ältere Benutzer sind daher länger dauernde Umgrabarbeiten praktisch nicht bewältigbar.
Nach der FR-A-2 676 324 ist deshalb ein Spaten vorgeschlagen worden, der die Umgrabarbeit erleichtern soll. Bei diesem Spaten handelt es sich jedoch aufgrund einer nur indirekt auf das Spatenblatt einwirkenden, aufwendigen Stellmechanik um eine außerordentlich sperrige Konstruktion, die eine Handhabung im Sinne eines Spatens herkömmlicher Art nicht zuläßt und verlangt außerdem, daß der Spaten für jeden Einstich senkrecht auf den Boden aufgesetzt werden muß.

### ZUSAMMENFASSUNG DER ERFINDUNG

Es ist ein Gegenstand der Erfindung, Spaten bekannter Art dahingehend auszubilden und zu verbessern, daß beim Umgraben Arme, Körper und insbesondere den Rücken des Benutzers belastende Hub- und Ablegevorgänge weitestgehend entfallen, d.h., diese Hub- und Ablegevorgänge sollen wie das Einstechen des Spatens in den Boden vom Benutzer per Fuß- bzw. Beindruck bewirkt werden können.
Ein weiterer Gegenstand der Erfindung besteht darin, den Spaten auch normal wie herkömmliche Spaten benutzen zu können.
Ferner ist es ein Gegenstand der Erfindung den Spaten derart auszubilden, daß es zur Umstellung vom Einstechen in den Boden in den Hub- und Ablegevorgang lediglich eines Umsetzens des Fußes bedarf, mit dem der Spaten belastet wird.
Weitere Gegenstände der Erfindung bestehen ferner darin, einen solchen Spaten konstruktiv so einfach wie möglich auszubilden.
Grundsätzlich sind diese Zielsetzungen mit einem Spaten dadurch erreicht, daß das Spatenblatt in Bezug auf den Spatenschaft mittels eines Fußhebels aus der verrasteten Einstechstellung bei gleichzeitiger Entrastung seitlich abkipp- und hochstellbar ist, wobei das Spatenblatt um ein zum Spatenschaft außermittiges und schräg orientiertes, mit dem Spatenschaft in Verbindung stehendes Lager schwenkbar ist und dabei der Spaten von Bodenwiderlagerelementen abgestützt wird. Das Spatenblatt und der Fußhebel sind dabei selbsttätig mittels Federelementen rückstellbar ausgebildet.
Dafür weist der Spaten nach der Erfindung folgende Merkmale auf:
a) am unteren Ende des Spatenschaftes und quer zu diesem ist ein Halter für das Spatenblatt angeordnet;
b) am Halter ist das Bodenwiderlagerelement in Form von nach unten weisenden, sich im wesentlichen parallel zum Spatenblatt erstreckenden, an ihren Enden zugespitzten Stützstäben angeordnet;
c) das Spatenblatt ist mit einem oberen Seitenrandbereich im schräg orientierten, am Halter angeordneten Lager schwenkbar gelagert;
d) zwischen Halter und Spatenblatt ist der an der Rückseite des Spatenblattes mit einem ersten Hebelarm anliegende und am Halter drehbar gelagerte Fußhebel angeordnet, dessen zweiter Hebelarm als Fußtritt über den Halter ragt und sich hinter dem Spatenschaft erstreckt und schließlich sind
e) am Halter auslösbare Verrastungselemente für die Verrastung des Spatenblattes in Grabstellung angeordnet.

Eine weitere Ausführungsform unterscheidet sich von dieser nur dadurch, daß statt der Stützstangen der Halter in Form eines flachen U-Profiles ausgebildet ist und sich als Bodenwiderlager bis in den mittleren Bereich des Spatenblattes erstreckt. Dabei liegt der Halter mit seinem unteren, zum Spatenblatt hin konvergierenden Rand am Spatenblatt an.
Bei der erfindungsgemäßen Ausbildung hat der Spatenschaft tatsächlich im wesentlichen nur noch Halte- und Führungsfunktion für das Spatenblatt, d.h., nach dem Bodeneinstich ist der Spatenschaft am sonst von ihm aus zu bewirkenden Anhub- und Abkipp- bzw. Abwurfvorgang im wesentlichen nicht mehr beteiligt, da dies im Anschluß an den Einstichvorgang vom Spatenblatt selbst bewirkt wird, wofür der Benutzer seinem Fuß lediglich auf den Fußhebel umzusetzen und diesen niederzutreten hat. Die ganze Umgrabarbeit kann also mit dem erfindungsgemäßen Spaten, praktisch ohne sich bücken zu müssen, durchgeführt werden

Die einzige Voraussetzung ist dabei, daß an einer umzugrabenden Bodenfläche zunächst die erste Grabzeile freigestochen sein muß, was aber auch mit dem erfindungsgemäßen Spaten praktiziert werden kann, da dafür nach einem Einstich in den Boden der Fußhebel nicht zu betätigen ist, d.h., das Spatenblatt verbleibt für eine erste Umgrabzeile in verrasteter Stellung zum Halter.

### KURZE BESCHREIBUNG DER ZEICHNUNGEN

Der erfindungsgemäße Spaten und seine bevorzugten Ausführungsformen bzw. Weiterbildungen werden nachfolgend an Hand der zeichnerischen Darstellung von Ausführungsbeispielen näher erläutert.
- Fig.1: zeigt den erfindungsgemäßen Spaten in Vorderansicht;
- Fig.2: zeigt den Spaten in rückseitiger Ansicht;
- Fig.3: zeigt den Spaten in Seitenansicht;
- Fig.4: zeigt den Spaten in Vorderansicht bei entferntem Spatenblatt;
- Fig.4A: zeigt eine Seitenansicht des Spatens in anderer Ausführungsform;
- Fig.5: zeigt vergrößert das Spatenblatt mit seinem Halter von unten her gesehen nach vollzogegenem Abwurf eines abgestochenen Bodenteiles;
- Fig.6: zeigt einen Schnitt durch den Halter für das Spatenblatt mit dem Ansatz des Spatenschaftes längs Linie VI-VI in Fig.2;
- Fig.7: zeigt etwa in Normalgröße den Halter in Ausführungsform als Gußstück;
- Fig.8: zeigt die bevorzugte Ausführungsform des Fußhebels in Vorderansicht;
- Fig.8A: zeigt den unteren Teil des Fußhebels, gesehen in Pfeilrichtung P in Fig.8;
- Fig.9: zeigt den Fußhebel gemäß Fig.8 in Seitenansicht;
- Fig.10: zeigt teilweise im Schnitt und in Ansicht die Verrastungselemente am Halter und zwar in Einzeldarstellungen gemäß der Fig. 10A bis 10C;
- Fig.11: zeigt die Verrastungselemente gemäß der Fig. 10A bis 10C zusammengefügt und in Draufsicht;
- Fig.12: im Schnitt eine andere Ausführungsfgorm der Verrastungselemente;
- Fig.13: schematisch die Winkelzuordnung vom Lager für das Spatenblatt zum Spatenschaft und
- Fig.14: schematisch die Winkelzuordnung vom Spatenblatt zum Spatenschaft.

### BESCHREIBUNG DER BEVORZUGTEN AUSFÜHRUNGFORMEN

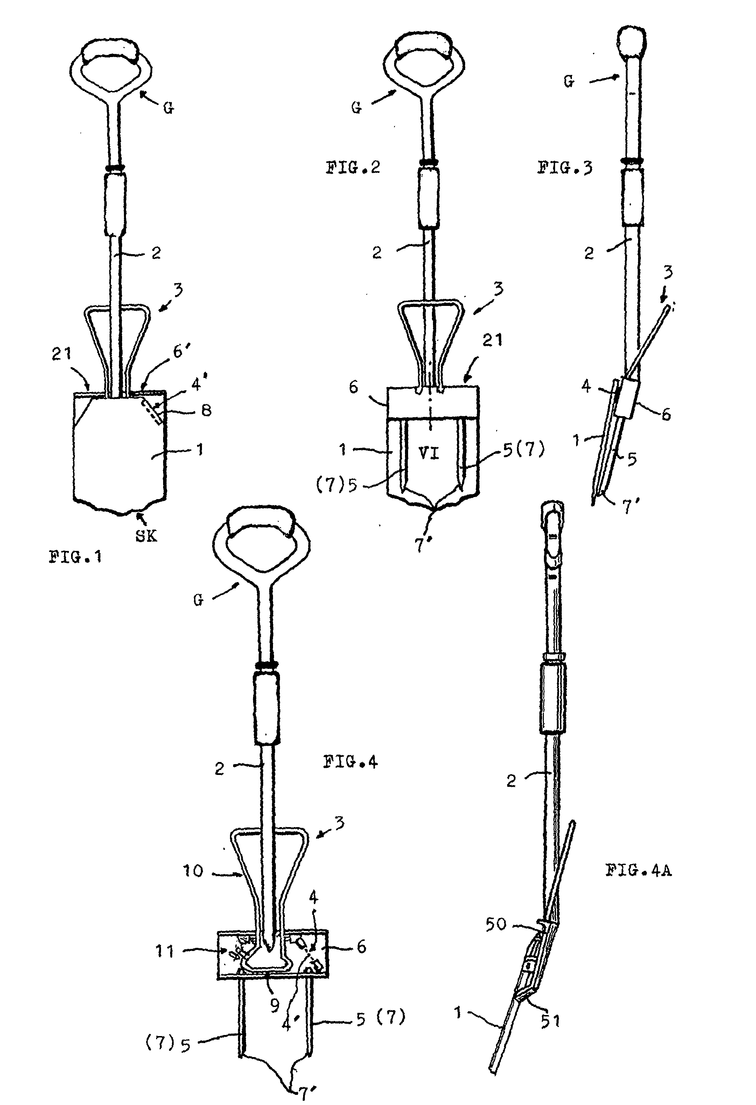

Der erfindungsgemäße Spaten besteht gemäß Fig.1 aus einem mit einem Griff G versehenen Spatenschaft 2, an dessen unterem Ende das Spatenblatt 1 angeordnet ist. Bezüglich der rückseitigen Ansicht und der Seitenansicht des erfindungsgemäßen Spatens wird auf die Fig.2,3 verwiesen. Von einem normalen Spaten bekannter Art unterscheidet sich der erfindungsgemäße Spaten dem ersten Anschein nach im wesentlichen nur durch den oberhalb des Spatenblattes 1 und hinter dem Spatenschaft 2 aufragenden Fußhebel 3.

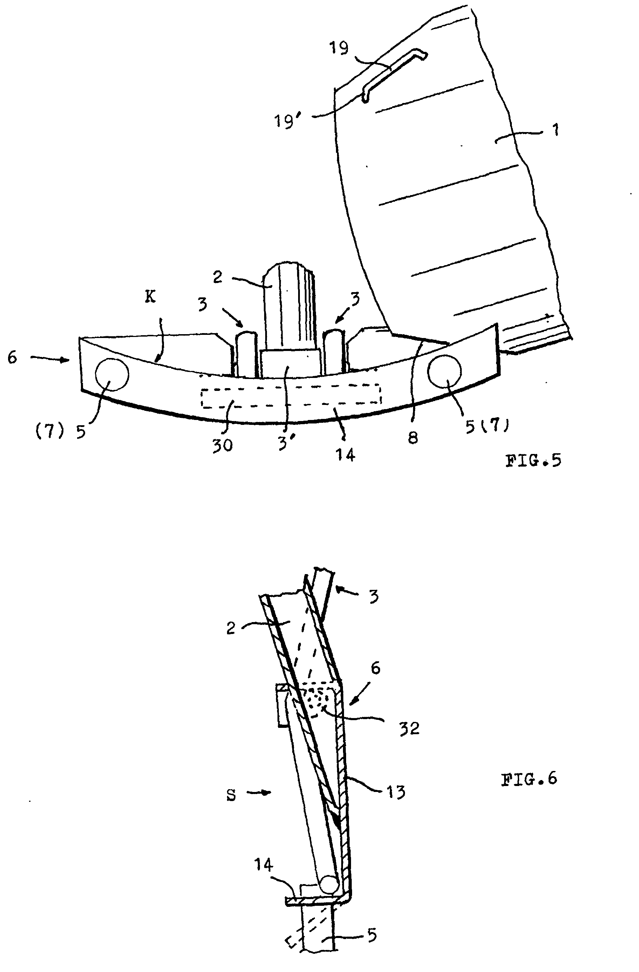

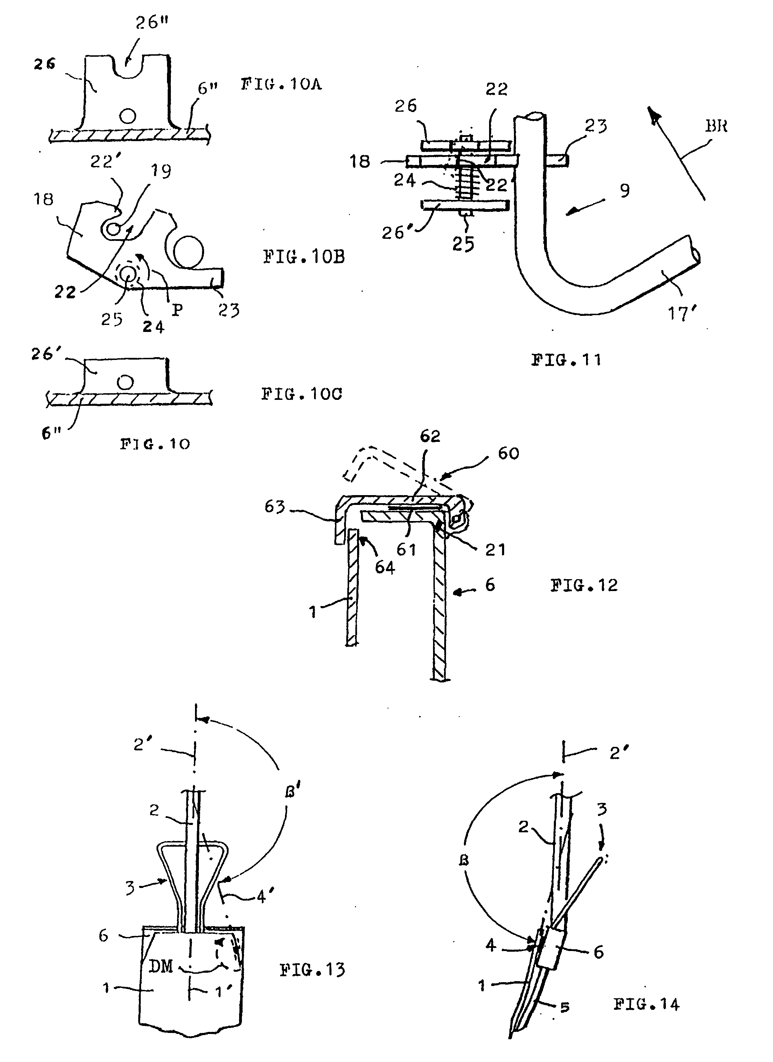

Das Spatenblatt 1 ist in Bezug auf den Spatenschaft 2 mittels dieses Fußhebels 3 aus einer verrasteten Grabstellung, die den Darstellungen in Fig.1 bis 3 entspricht, seitlich abkipp- und hochstellbar ausgebildet, wofür das Spatenblatt 1 um ein zum Spatenschaft 2 außermittig und schräg orientiertes Lager 4 schwenkbar ist.
Bezüglich dieser hochgekippten Stellung wird auf Fig.5 verwiesen, bei der die abgestochene Bodenportion (nicht dargestellt) zur entsprechenden Seite hin (hier nach rechts) abgeworfen wird. Das in Fig. 5 dargestellte Spatenblatt 1 hat man sich dabei als aus der Darstellungsebene herausragend vorzustellen und den Spatenschaft 2 in entgegengesetzter Richtung. Das Spatenblatt 1 ist, wie üblich, schwach gewölbt ausgebildet und hat vorteilhaft eine Schneidkante SK, die, wie in Fig.1,2 dargestellt, stumpfwinklig und gewellt verläuft, was das Einstechen und auch Anheben des Spatenblattes 1 mit dem Fußhebel 3 erleichtert.
Für eine bequeme Haltung des Spatens durch den Benutzer, einen günstigen Einstich in den Boden und auch günstigen Abwurf des abgestochenen Bodenteiles hat sich unter Verweis auf die Fig.13,14 bezüglich der Winkelzuordnungen eine Ausführungsform dahingehend als vorteilhaft erwiesen, daß die Mittellängsachse 1' des Spatenblattes 1 mit der Achse 2' des Spatenschaftes 2 einen stumpfen Winkel β von 160 bis 170 °, vorzugsweise 165°, und die Achse 4' des schrägen Lagers 4 mit der Achse 2' des Spatenschaftes 2 einen stumpfen Winkel β' von 155 bis 165 °, vorzugsweise 160 ° einschließt.

Im Einzelnen ist der Spaten hierfür wie folgt ausgebildet: Am unteren Ende des Spatenschaftes 2 und quer zu diesem ist ein Halter 6 für das Spatenblatt 1 angeordnet, an dem Bodenwiderlagerelemente 5 in Form von nach unten weisenden, sich im wesentlichen parallel zum Spatenblatt 1 erstreckenden, an ihren Enden 7' zugespitzte Stützstäbe 7 sitzen. Diese Bodenwiderlagerelemente 5 sind erforderlich, damit bei in den Boden eingestochem Spatenblatt 1 dieses mit dem abgestochenen Bodenstück per Fußhebel 3 hochgedrückt werden kann.
Statt solcher Stützstäbe 7 kann aber auch der Halter 6 als Bodenwiderlager 5 ausgebildet werden, wie dies in Fig.4A dargestellt ist. Diese Ausführungsform unterscheidet sich von der gemäß Fig.3,4 nur dadurch, daß der Halter 6 in Form eines flachen U-Profiles 50 ausgebildet ist und sich als Bodenwiderlager bis in den mittleren Bereich M des Spatenblattes 1 erstreckt. Dabei liegt der mit seinem unteren zum Spatenblatt 1 hin konvergierenden Rand 51 des U-Profiles in Grab- bzw. verrasteter Arbeitsstellung an der rückseitigen Fläche des Spatenblattes 1 an.

Davon ausgehend, daß der Spaten in der Regel vom Benutzer mit dem rechten Fuß betätigt bzw. belastet wird, ist das Spatenblatt 1 unter Verweis auf Fig.4 mit seinem linken oberen Seitenrandbereich 8 im schräg orientierten, am Halter 6 angeordneten Lager 4 schwenkbar gelagert.
Außerdem erstreckt sich zwischen dem Halter 6 und dem Spatenblatt 1 der an der Rückseite des Spatenblattes 1 anliegende erste Hebelarm 9 des Fußhebels 3, der am Halter 6 drehbar gelagert ist. Der zweite Hebelarm 10 des Fußhebels 3 ragt als Fußtritt über den Halter 6 heraus und erstreckt sich hinter dem Spatenschaft 2, wie dies insbesondere aus Fig.3 und 4A erkennbar ist.
Ferner sind quer gegenüber dem schräg orientierten Lager 4 des Spatenblattes 1 am Halter 6 Verrastungselemente 11 angeordnet, die einerseits mit dem Spatenblatt 1 und andererseits mit dem ersten Hebelarm 9 des Fußhebels 3 bei Grabstellung des Spatenblattes 1 im Eingriff stehen. Diese Verrastungselemente 11 und ihre Funktion werden noch näher erläutert.

Damit sich nach jedem Bodeneinstich und seitlichem Abwurf des abgestochenen Bodens das Spatenblatt 1 und der Fußhebel 3 automatisch und sicher wieder zurückstellen und verrasten, sind dem Spatenblatt 1 und dem Fußhebel 3 Federelementen 12,12' zugeordnet, die sich in ihrer Wirkung gegenseitig ergänzen. Sofern das Federelement 12 für das Spatenblatt 1 stark genug bezüglich seiner Federkraft bemessen ist, kann gegf. am Fußhebel 3 auf das Federelement 12' verzichtet werden, da der Fußhebel 3 vom Spatenblatt 1 bei dessen Rückstellung ebenfalls mit zurückgedrückt würde. Im übrigen sind, wie dargestellt, diese Federelemente 12,12' im Lager 4 für das Spatenblatt 1 und im Lager 3' für den Fußhebel 3 integriert.

Unter Verweis auf Fig.1 und 4 ist der am Lager 4 befestigte obere Seitenrandbereich 8 des Spatenblattes 1 parallel zur Achse 4' des schräg orientierten Lagers 4 verlaufend ausgebildet. Wenn diese obere Ecke des Spatenblattes 1 nicht abgeschnitten wäre, würde dies eine tiefere Raumbeanspruchung beim Schwenken des Spatenblattes 1 zur Folge haben, die dem Erfordernis entgegenstünde, den Spaten, von der Seite her gesehen, so schmal wie möglich auszubilden.

Was den bereits vorerwähnten Halter 6 betrifft, so ist dieser bei der Ausführsform nach Fig. 1 bis 4 im Querschnitt in Form eines U-Profiles 13 (siehe Fig.6) ausgebildet, das mit seiner offenen Seite S gegen das Spatenblatt 1 gerichtet ist, das ferner mit seinem unteren Schenkel 14 am in Grabstellung befindlichen, schwach gewölbten Spatenblatt 1 anliegt und in dem das schräge Lager 4 und die Verrastungselemente 11 angeordnet sind. Mit Rücksicht auf einen weniger unbehinderten Einstechvorgang in den Boden kann auch hierbei der untere Schenkel 14 des U-Profiles 13 zum Spatenblatt hin konvergierend angewinkelt angeordnet sein, wie dies in Fig.6 gestrichelt angedeutet ist und was insoweit auch der Ausführungsform des Halters nach Fig.4A entspricht. Im übrigen ist dieser Schenkel 14, wie aus Fig.5 ersichtlich, in seiner Kontur K an die Wölbung des Spatenblattes 1 angepaßt, was auch für den Rand 51 in Fig.4A gilt.

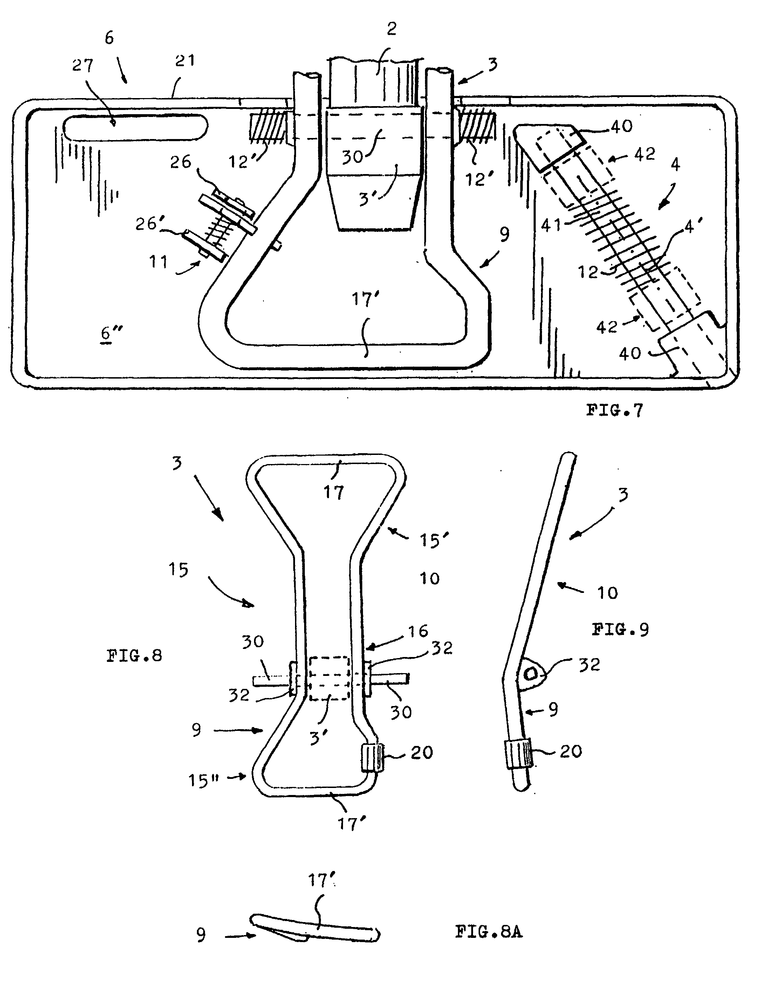

Außerdem ist der Halter 6 gemäß Fig.7 bevorzugt als schalenförmiges Gußteil aus bspw. Aluminiumguß hergestellt, wobei an diesem Gußteil die notwendigen Lager 40 für eine Welle 41 mit angeformt sind, auf der die Lageraugen 42 des Spatenblattes 1 sitzen und auch die Rückstellfeder 12 für das Spatenblatt 1. In diesem Falle sind dann ebenfalls die noch näher zu erläuternden Lagerstücke 26, 26' für die Verrastungselemente 11 mit am Boden 6" des Halters 6 angeformt.

Der zweiarmige Fußhebel 3 ist, wie in den Fig.8,9 dargestellt, bspw. in Form einer taillierten Doppelschleife 15 ausgebildet, die im Bereich ihrer Taille 16 Lageraugen 32 aufweist und am Halter 6 mittels einer Welle 30 im Lager 3' gelagert ist, und wobei die beiden Schleifen 15',15" zur Welle 30 des Fußhebels 3 parallele Stränge 17,17' aufweisen. Diese Doppelschleife 15 besteht mit Rücksicht auf die aufzunehmenden Belastungen aus Edelstahlrundmaterial.
Der Strang 17 der Schleife 15' bildet dabei den eigentlichen Fußtritt bzw. die Fußauflage, wenn der Fuß des Benutzers nach Einstich des Spatenblattes 1 in den Boden von der rechten, oberen Kante 21 (siehe Fig.1) des Halters 6 auf den Fußhebel 3 zwecks Verschwenkung des Spatenblattes 1 umgesetzt wird. Der erste Hebelarm 9 des Fußhebels 3, der also bei dessen Niedertreten das Spatenblatt 1 anhebt, ist wegen dieser Dauerbelastung, wie ebenfalls in Fig. 8 dargestellt, mit einem Gleitstück 20 aus verschleißfestem Kunststoff bspw. in Form einer Rolle versehen und steht mit diesem Gleitstück 20 mit der Rückseite des Spatenblattes 1 in Kontakt, d.h., Reibung von Metall auf Metall ist vermieden.

Was den Strang 17' des Fußhebels 3 betrifft, der also das Spatenblatt 1 anzuheben hat, so ist dieser, wie in Fig.8A dargestellt, in Bezug auf die Achse 30' der Welle 30 zum Lager 4 hin fallend geneigt ausgebildet und außerdem in Anpassung an die Wölbung des Spatenblattes 1 entspechend angepaßt gewölbt. Damit wird erreicht, daß das Hochkippen des Spatenblattes 1 mit der linken Seite, also einem längeren Hebelarm in Bezug auf die Schwenkachse 4' beginnt.

Um die Welle 30 für den Fußhebel 3 in das Lager 31 von der Seite her einschieben zu können, ist im der Spatenblattform angepaßt gewölbten Boden 6" des Halters 6 ein Langloch 27 angeordnet.

Was die Verrastung zwischen Spatenblatt 1 und Halter 6 betrifft, so wird diesbezüglich auf Fig. 10 A bis 10 C und die Fig.11 verwiesen.
Hiernach sind die Verrastungselemente 11 aus einem am Halter 6 auf einer Welle 25 schwenkbar gelagerten Riegel 18 gebildet, der in verrasteter Grabstellung des Spatenblattes 1 einerseits mit einem auf der Rückseite des Spatenblattes 1 angeordneten Verrastungsbügel 19 (siehe auch Fig.5) und andererseits mit dem ersten Hebelarm 9 des Fußhebels 3 derart im Eingriff steht, daß beim Schwenken des ersten Hebelarmes 9 bzw. Niedertreten des Fußhebels 3 der Riegel 18 den Verrastungsbügel 19 des Spatenblattes 1 freistellt. Der mit einer auf der Welle 25 mit angeordneten kleinen Feder 24 belastete Riegel 18 ist dafür mit einer eine Sperrnase 22' aufweisenden Ausnehmung 22 versehen, mit der der Verrastungsbügel 19 des Spatenblattes 1 erfaßt wird, und ferner mit einem kleinen Steg 23, der beim Anheben des ersten Hebelarmes 9 freigestellt wird, wodurch wiederum die Sperrnase 22' den Verrastungsbügel 19 treigibt, was Voraussetzung dafür ist, daß das Spatenblatt 1 vom ersten Hebelarm 9 hochgedrückt werden kann. Die kleine Feder 24 steht dabei mit dem Riegel 18 so in Verbindung, daß dieser Riegel 18 in Richtung des Pfeiles P gedreht wird. Die kleine Welle 25 ist in Lagerstegen 26,26' gehalten, wobei der obere Lagersteg 26 eine Ausnehmung 26" aufweist, in die sich der Verrastungsbügel 19 des Spatenblattes 1 einsetzt. Da die ganze Verrastungseinrichtung 11, wie aus Fig.11 ersichtlich, schräg zur Belastungsrichtung BR des Spatens steht, fängt der die Ausnehmung 26" durchgreifende Bügel 19 das sich bei Grabbelastung des Spatenblattes 1 ergebende Drehmoment DM auf (gestrichelt in Fig.13 eingezeichnet), d.h., das Lager 4 des Spatenblattes 1 wird entsprechend entlastet.

Andere Ausführungsformen für eine solche Verrastung sind durchaus vorstellbar, d.h., eine solche Verrastung bzw. Rückhaltung des Spatenblattes 1 für den Einstechvorgang wäre zum Beispiel auch mit einem ausreichnd starken, direkt auf das Spatenblatt 1 wirkenden Magneten an entsprechender Stelle des Halters 6 möglich.

Besonders vorteilhaft und zweckmäßig hat sich eine Ausführungsform der Verrastungselemente 11 gemäß Fig.12 dahingehend ergeben, daß diese für das Spatenblatt 1 in Form einer im Querschnitt rechtwinkligen Trittleiste 60 ausgebildet und diese an der oberen Kante 21 des Halters 6, unter dem Druck einer Feder 61 stehend, derart mit einem ersten Schenkel 62 schwenkbar gelagert ist, daß ihr zweiter Schenkel 63 in niedergedrückter Stellung den oberen Rand 64 des Spatenblattes 1 übergreift. Bei dieser Ausführungsform sollte das Federelement 12 für die Rückstellung des Spatenblattes 1 etwas stärker bemessen werden, damit beim Ansetzen des Spatenblattes 1 am Boden dieses seine normale Grabstellung beibehält. Diese Ausführungsform hat den zweifachen Vorteil, daß zum einen diese Verrastungselemente ganz oben am Spaten sitzen, also weitestgehend einer Verschmutzung und damit etwaiger Blockade entzogen sind und daß zum anderen die Verrastung auf einfache Weise schon beim Umsetzen des Fußes auf den Fußhebel 3 sofort freigegeben wird.

Die Erfindung ist nicht auf die beschriebenen und dargestellten Ausführungsformen beschränkt, und es können durchaus Modifikationen vorgenommen werden, sofern diese im Rahmen der Ansprüche liegen.

## Patentansprüche

1. Spaten, bestehend aus einem mit Griff (G) versehenen Spatenschaft (2), an dessen unterem Ende das Spatenblatt (1) angeordnet ist, das in Bezug auf den Spatenschaft (2) mittels eines Fußhebels (3) aus einer zu einem Bodenwiderlager (5) verrasteten Grabstellung um ein zum Spatenschaft (2) außermittiges und schräg orientiertes, am Bodenwiderlager (5) angeordnetes Lager (4) bei gleichzeitiger Entrastung des Spatenblattes (1) seitlich abkipp- und hochstellbar ausgebildet, wobei Spatenblatt (1) und der Fußhebel (3) mittels Federelementen (12,12') selbsttätig zum Bodenwiderlager (5) rückstellbar ausgebildet sind,
**gekennzeichnet durch** die folgenden Merkmale:
a) am unteren Ende des Spatenschaftes (2) und quer zu diesem ist ein Halter (6) für das Spatenblatt (1) angeordnet;
b) am Halter (6) ist das Bodenwiderlagerelement (5) in Form von nach unten weisenden, sich im wesentlichen parallel zum Spatenblatt (1) erstreckenden, an ihren Enden (7') zugespitzten Stützstäben (7) angeordnet;
c) das Spatenblatt (1) ist mit einem oberen Seitenrandbereich (8) im schräg orientierten, am Halter (6) angeordneten Lager(4) schwenkbar gelagert;
d) zwischen Halter (6) und Spatenblatt (1) ist der an der Rückseite des Spatenblattes (1) mit einem ersten Hebelarm (9) anliegende und am Halter (6) drehbar gelagerte Fußhebel (3) angeordnet, dessen zweiter Hebelarm (10) als Fußtritt über den Halter (6) ragt und sich hinter dem Spatenschaft (2) erstreckt und
e) am Halter (6) sind auslösbare Verrastungselemente (11) für die Verrastung des Spatenblattes (1) in Grabstellung angeordnet.

2. Spaten, bestehend aus einem mit Griff (G) versehenen Spatenschaft (2), an dessen unterem Ende das Spatenblatt (1) angeordnet ist, das in Bezug auf den Spatenschaft (2) mittels eines Fußhebels (3) aus einer zu einem Bodenwiderlager (5) verrasteten Grabstellung um ein zum Spatenschaft (2) außermittiges und schräg orientiertes, am Bodenwiderlager (5) angeordnetes Lager (4) bei gleichzeitiger Entrastung des Spatenblattes (1) seitlich abkipp- und hochstellbar ausgebildet, wobei Spatenblatt (1) und der Fußhebel (3) mittels Federelementen (12,12') selbsttätig zum Bodenwiderlager (5) rückstellbar ausgebildet sind,
**gekennzeichnet durch die folgenden Merkmale:**
a) am unteren Ende des Spatenschaftes (2) und quer zu diesem ist ein Halter (6) für das Spatenblatt (1) angeordnet;
b) der Halter (6) ist in Form eines flachen U-Profiles (50) ausgebildet und erstreckt sich als Bodenwiderlager (5) bis in den mittleren Bereich (M) des Spatenblattes (1) und liegt mit seinem unteren, zum Spatenblatt (1) hin konvergierenden Rand (51) in Grabstellung am Spatenblatt (1) an;
c) das Spatenblatt (1) ist mit einem oberen Seitenrandbereich (8) im schräg orientierten, am Halter (6) angeordneten Lager(4) schwenkbar gelagert;
d) zwischen Halter (6) und Spatenblatt (1) ist der an der Rückseite des Spatenblattes (1) mit einem ersten Hebelarm (9) anliegende und am Halter (6) drehbar gelagerte Fußhebel (3) angeordnet, dessen zweiter Hebelarm (10) als Fußtritt über den Halter (6) ragt und sich hinter dem Spatenschaft (2) erstreckt und
e) am Halter (6) sind auslösbare Verrastungselemente (11) für die Verrastung des Spatenblattes (1) in Grabstellung angeordnet.

3. Spaten nach Anspruch 1 oder 2,
**dadurch gekennzeichnet,**
**daß** die Verrastungselemente (11) einerseits mit dem Spatenblatt (1) und andererseits mit dem ersten Hebelarm (9) des Fußhebels (3) bei Grabstellung des Spatenblattes (1) im Eingriff stehen.

4. Spaten nach Anspruch 3,
**dadurch gekennzeichnet,**
**daß** die Verrastungselemente (11) aus einem am Halter (6) schwenkbar gelagerten Riegel (18) gebildet sind, der in Grabstellung des Spatenblattes (1) einerseits mit einem auf der Rückseite des Spatenblattes (1) angeordneten Sperrelement (19) und andererseits mit dem ersten Hebelarm (9) des Fußhebels (3) derart im Eingriff steht, daß beim Schwenken des ersten Hebelarmes (9) der Riegel (18) das Sperrelement (19) des Spatenblattes (1) freistellt.

5. Spaten nach Anspruch 3,
**dadurch gekennzeichnet,**
**daß** die Verrastungselemente (11) für das Spatenblatt (1) in Form einer im Querschnitt rechtwinkligen Trittleiste (60) ausgebildet und diese an der oberen Kante (21) des Halters (6), unter Druck einer Feder (61) stehend, derart mit einem ersten Schenkel (62) schwenkbar gelagert ist, daß ihr zweiter Schenkel (63) in niedergedrückter Stellung den oberen Rand (64) des Spatenblattes (1) übergreift.

6. Spaten nach einem der Ansprüche 1 bis 5,
**dadurch gekennzeichnet,**
**daß** der am Lager (4) schwenkbar befestigte Seitenrandbereich (8) mit seiner Kante (8') parallel zur Achse (4') des Lagers (4) verlaufend ausgebildet ist.

7. Spaten nach einem der Ansprüche 1 bis 6,
**dadurch gekennzeichnet,**
**daß** der Halter (6) im Querschnitt in Form eines U-Profiles (13) ausgebildet ist, das mit seiner offenen Seite (S) gegen das Spatenblatt (1) gerichtet ist, mit seinem unteren Schenkel (14) am in Grabstellung befindlichen Spatenblatt (1) anliegt und in dem das schräge Lager (4) und die Verrastungselemente (11) angeordnet sind.

8. Spaten nach Anspruch 7,
**dadurch gekennzeichnet,**
**daß** der untere Schenkel (14) des U-Profiles (13) zum Spatenblatt (1) hin konvergierend angewinkelt angeordnet ist.

9. Spaten nach einem der Ansprüche 1 bis 8,
**dadurch gekennzeichnet,**
**daß** der zweiarmige Fußhebel (3) in Form einer taillierten Doppelschleife (15) ausgebildet ist, die im Bereich ihrer Taille (16) mittels einer Welle (30) am Halter (6) gelagert ist und wobei die beiden Schleifen (15',15") zum Lager (3') des Fußhebels (3) parallele Stränge (17,17') aufweisen.

10. Spaten nach Anspruch 9,
**dadurch gekennzeichnet,**
**daß** der Strang (17') des Fußhebels (3) in Bezug auf die Achse der Welle (30) zum Lager (4) des Spatenblattes hin fallend geneigt angeordnet und außerdem in Anpassung an die Wölbung des Spatenblattes (1) gewölbt ausgebildet ist.

11. Spaten nach einem der Ansprüche 1 bis 10,
**dadurch gekennzeichnet,**
**daß** der erste Hebelarm (9) des Fußhebels (3) mit einem Gleitstück (20) versehen ist und mit diesem mit der Rückseite des Spatenblattes (1) in Kontakt steht.

12. Spaten nach einem der Ansprüche 1 bis 11,
**dadurch gekennzeichnet,**
**daß** die Mittellängsachse (1') des Spatenblattes (1) mit der Achse (2') des Spatenschaftes (2) einen stumpfen Winkel β von 160 bis 170 °, vorzugsweise 165°, und die Achse (4') des schrägen Lagers (4) mit der Achse (2') des Spatenschaftes (2) einen stumpfen Winkel β' von 155 bis 165 °, vorzugsweise 160 ° einschließt.

13. Spaten nach einem der Ansprüche 1 bis 12,
**dadurch gekennzeichnet,**
**daß** die Schneidkante (SK) des Spatenblattes (1) stumpfwinklig und gewellt ausgebildet ist.

## Claims

1. A spade, provided with a handle (G) and consisting of a spade shaft (2) at the bottom end of which the spade blade (1) is arranged which is designed to be laterally tiltable and adapted to be raised by means of a foot lever (3) from a digging position locked to form a soil abutment (5) about an eccentric and oblique-oriented bearing (4), relative to the spade shaft (2), arranged on the soil abutment (5), with the spade blade (1) being simultaneously unlocked and with the spade blade (1) and the foot lever (3) being designed to automatically reset to the soil abutment (5) by means of spring elements (12,12').
**Characterized by** the following features:
a) holder (6) for the spade blade (1) located on the bottom end of the spade shaft (2) and in transverse direction thereto;
b) located on the holder (6) is the soil abutment (5) in the form of downwardly pointing supporting bars (7) extending mainly parallel to the spade blade (1) and being tapered at their ends (7');
c) one upper lateral edge (8) of the spade blade (1) is pivoted in an oblique-oriented bearing (4) located on the holder (6);
d) located between holder (6) and spade blade (1) is the foot lever (3) the first lever arm (9)of which is in abutment with the rear side of the spade blade (1) and pivoted on the holder (6), the second lever arm (10) of which is protruding beyond the holder (6) in the form of a foot treadle and extending behind the spade shaft (2)
and
e) located on the holder (6) are releasable locking elements (11) for the locking of the spade blade (1) in digging position.

2. A spade, provided with a handle (G) and consisting of a spade shaft (2) at the bottom end of which the spade blade (1) is arranged which is designed to be laterally tiltable and adapted to be raised by means of a foot lever (3) from a digging position locked to form a soil abutment (5) about an eccentric and oblique-oriented bearing (4), relative to the spade shaft (2), arranged on the soil abutment (5), with the spade blade (1) being simultaneously unlocked and with the spade blade (1) and the foot lever (3) being designed to automatically reset to the soil abutment (5) by means of spring elements (12,12').
**Characterized by** the following features:
a) holder (6) for the spade blade (1) located on the bottom end of the spade shaft (2) and in transverse direction thereto;
b) the holder (6) has the form a flat U-shaped profile (50) and extends as soil abutment (5) down to the central area (M) of the spade blade (1) and in digging position its bottom edge (51), converging towards the spade blade, (1) is in abutment with the spade blade (1);
c) one upper lateral edge (8) of the spade blade (1) is pivoted in an oblique-oriented bearing (4) located on the holder (6);
d) located between holder (6) and spade blade (1) is the foot lever (3) the first lever arm (9) of which is in abutment with the rear side of the spade blade (1) and pivoted on the holder (6), the second lever arm (10) of which is protruding beyond the holder (6) in the form of a foot treadle and extending behind the spade shaft (2)
and
e) located on the holder (6) are releasable locking elements (11) for the locking of the spade blade (1) in digging position.

3. Spade according to claim 1 or 2,
**characterized in**
**that** the locking elements (11), on the one hand, are in engagement with the spade blade (1) and, on the other hand, are in engagement with the first lever arm (9) of the foot lever (3) in digging position of the spade blade (1).

4. Spade according to claim 3
**characterized in**
**that** the locking elements (11) comprise a latch (18) pivoted on the holder (6), with the latch, in digging position of the spade blade (1), on the one hand being in engagement with the locking element (19) located on the rear side of the spade blade (1) and, on the other hand, in engagement with the first lever arm (9) of the foot lever (3) in such a way that during swivelling of the first lever arm (9) the latch (18) releases the locking element (19) of the spade blade (1).

5. Spade according to claim 3
**characterized in**
**that** the locking elements (11) for the spade blade (1) are designed in the shape of a treadle bar (60) of rectangular cross-section which, at the upper edge (21) of the holder (6) under pressure of a spring (61) displays its first leg (62) pivoted in a way that the second leg (63), in pressed-down position, embraces the upper edge (64) of the spade blade (1).

6. Spade according to any one of claims 1 through 5
**characterized in**
**that** the lateral edge area (8) pivoted to the bearing (4) with the edge (8') is designed to extend in parallel to the axis (4') of the bearing (4).

7. Spade according to any one of claims 1 through 6
**characterized in**
**that** the cross-section of the holder (6) has a U-shaped profile (13) whose open side (S) is directed towards the spade blade (1), with the bottom leg being in abutment with the spade blade (1) in digging position, and in which the oblique bearing (4) and the locking elements (11) are located.

8. Spade according to claim 7
**characterized in**
**that** the bottom leg (14) of the U-shaped profile (13) is in converging angular position to the spade blade (1).

9. Spade according to any one of claims 1 to 8
**characterized in**
**that** the two-armed foot lever (3) is designed in the shape of a constricted dual loop (15) which in the area of its neck (16), by means of a shaft (30), located on the holder (6), and wherein the two loops (15', 15") display strands (17, 17') extending in parallel to the bearing (3') of the foot lever (3).

10. Spade according to claim 9
**characterized in**
**that** the strand (17) of the foot lever (3), relative to the axis of the shaft (30) reveals a descending inclination towards the bearing (4) of the spade blade and, additionally, is curved to conform to the curvature of the spade blade (1).

11. Spade according to any one of claims 1 through 10
**characterized in**
**that** the first lever arm (9) of the foot lever (3) is provided with a slipper (20) through which it is in contact with the rear side of the spade blade (1).

12. Spade according to any one of claims 1 through I 1
**characterized in**
the central longitudinal axis (1') of the spade blade (1) and the axis (2') of the spade shaft (2) form an obtuse angle β of 160 to 170°, preferably 165°, and the axis (4') of the oblique bearing (4) and the axis (2') of the spade shaft (2) form an obtuse angle β' of 155 to 165°, preferably 160°.

13. Spade according to any one of claims 1 through 12
**characterized in**
**that** the cutting edge (SK) of the spade blade (1) is obtuse-angled and wave-shaped.

## Revendications

1. Ladite bêche est composée d'un corps de bêche (2), muni d'une poignée (G) et porte, à son extrémité inférieure, une pelle (1) qui se présente sous forme de pelle à basculement latéral et à élévation. Au moyen d'une pédale (3), cette dite pelle effectue, par rapport au corps de bêche, un mouvement autour d'un palier excentré, incliné, fixé à la butée de sol, ce mouvement partant d'une position de labour enclenchée vers une butée de sol lors du déclenchement simultané de la pelle.
grâce à des éléments de ressort (12, 12 ' ), la pelle (1) et la pédale (3) se mettent automatiquement à la position initiale par rapport à la butée de sol.
Ladite bêche présente les caractéristiques suivantes:
a) un support (6) pour la pelle (1) est monté en travers du corps de bêche (2), à l'extrémité inférieure de ce dernier;
b) l'élément de butée de sol (5) placé sur le support (6) est disposé en forme de barres d'appui (7) tournées vers le bas, parallèles à la pelle de bêche (1) et pointues à leurs extrémités (7 ' ) ;
c) placée dans le palier (4) incliné, lui-même monté sur le support (6), la pelle (1) pivote avec une zone supérieure de rebords latéraux (8) ;
d) fixée au dos de la pelle (1), la pédale (3), logée entre le support (6) et la pelle (1), est mobile et montée dans le prolongement du premier bras de levier (9); fonctionnant comme pédale, le second bras de levier (10) surplombe le support (6) et s'étend jusqu'au corps de bêche (2) ;
e) les éléments d'enclenchement (11), permettant d'enclencher la pelle (1) en position de labour, sont montés sur le support (6).

2. Ladite bêche est composée d'un corps de bêche (2), muni d'une poignée (G) et porte, à son extrémité inférieure, une pelle (1) qui se présente sous forme de pelle à basculement latéral et à élévation. Au moyen d'une pédale (3), cette dite pelle effectue, par rapport au corps de bêche, un mouvement autour d'un palier excentré, incliné, fixé à la butée de sol, ce mouvement partant d'une position de labour enclenchée vers une butée de sol lors du déclenchement simultané de la pelle; grâce à des éléments de ressort (12, 12 ' ), la pelle (1) et la pédale (3) se mettent automatiquement à la position initiale par rapport à la butée de sol.
Ladite bêche présente les caractéristiques suivantes:
a) un support (6) pour la pelle (1) est monté en travers du corps de bêche (2), à l'extrémité inférieure de ce dernier;
b) le support (6) se présente sous forme de profilé en u plat (50) ; ce dit support se prolonge comme butée de sol (5) jusque dans la zone médiane (M) de la pelle (1), son bord inférieur, qui converge vers la pelle (51), appuie, en position de labour, sur la pelle (1) ;
c) placée dans le palier (4) incliné, lui-même monté sur le support (6), la pelle (1) pivote avec une zone supérieure de rebords latéraux (8) ;
d) fixée au dos de la pelle (1), la pédale (3), logée entre le support (6) et la pelle (1), est mobile et montée dans le prolongement du premier bras de levier (9); fonctionnant comme pédale, le second bras de levier (10) surplombe le support (6) et s'étend jusqu'au corps de bêche (2) ;
e) les éléments d'enclenchement (11), permettant d'enclencher la pelle (1) en position de labour, sont montés sur le support (6).

3. Ladite bêche, conformément à la spécification 1 ou 2,
se **caractérise par**
les éléments d'enclenchement (11) qui sont en prise, d'un côté, avec la pelle (1), d'un autre côté, avec le premier bras de levier (9) de la pédale (3) lorsque la pelle (1) est en position de labour.

4. Ladite bêche, conformément à la spécification 3,
se **caractérise par**
les éléments d'enclenchement (11) qui sont constitués d'un verrou (18) pivotant monté sur le support (6) ; en position de labour de la pelle de bêche (1), ce verrou est en prise, d'un côté, avec un élément de blocage (19), monté au dos de la pelle (1), et, d'un autre côté, avec le premier bras de levier (9) de la pédale (3) de manière à ce que le verrou (18) libère l'élément de blocage (19) de la pelle lors du pivotement du premier bras de levier (9).

5. Ladite bêche, conformément à la spécification 3,
se **caractérise par**
les éléments d'enclenchement (11) de la pelle (1) qui se présentent, dans la coupe transversale, sous forme de pédale rectangulaire montée sur l'arrête (21) supérieure du support (6). Sous la pression d'un ressort (61), cette dite pédale pivoe avec une première aile (62) de telle sorte que sa deuxième aile (63) appuie, en position enfoncée, contre le bord supérieur (64) de la pelle (1).

6. Ladite bêche, conformément à l'une des spécifications mentionnées de 1 à 5,
se **caractérise par**
la zone pivotante de rebords latéraux (8) , fixée sur le palier (4) dont l'arrête (8 ' ) est parallèle à l'axe (4 ' ) du palier (4).

7. Ladite bêche, conformément à l'une des spécifications mentionnées de 1 à 6,
se **caractérise par**
le support (6) qui se présente, dans la coupe transversale, sous forme de profilé en u (13), dont la face ouverte (S) est tournée vers la pelle (1) ; son aile inférieure (14) repose sur la pelle (1) en position de labour; le palier incliné (4) et les éléments d'enclenchement (11) sont montés dans le support.

8. Ladite bêche, conformément à la spécification 7,
se **caractérise par**
l'aile inférieure (14) du profilé en u (13) qui est coudée et qui converge vers la pelle (1).

9. Ladite bêche, conformément à l'une des spécifications mentionnées de 1 à 8,
se **caractérise par**
la pédale à deux bras (3). Cette dernière se présente sous forme d'une double boucle cintrée (16) qui est fixée, au niveau du col, sur le support (6) à l'aide d'un arbre (30). Ces deux boucles (15', 15") présentent des branches parallèles (17, 17' ) au palier (3' ) de la pédale (3).

10. Ladite bêche, conformément à la spécification 9
se **caractérise par**
la branche (17 ' ) de la pédale, qui est inclinée et descend, par rapport à l'axe de l'arbre (30), vers le palier. En outre, pour s'adapter à la convexité de la pelle (1), la branche est bombée.

11. Ladite bêche, conformément à l'une des spécifications mentionnées de 1 à 10,
se **caractérise par**
le premier bras de levier (9) de la pédale (3) qui est doté d'une coulisse (20) permettant à ce premier bras de levier d'être en contact avec le dos de la pelle (1).

12. Ladite bêche, conformément à l'une des spécifications mentionnées de 1 à 11,
se **caractérise par**
l'axe longitudinal médian (1' ) de la pelle (1) qui forme avec l'axe (2 ' ) du corps de bêche (2) un angle obtus β de 160° à 170°, de préférence de 165°, l'axe (4 ' ) du palier incliné (4) formant avec l'axe (2 ' ) du corps de bêche, un angle obtus β' de 155° à 165°, de préférence de 160°.

13. Ladite bêche, conformément à l'une des spécifications mentionnées de 1 à 12,
se **caractérise par**
l'arrête coupante (SK) de la pelle (1) qui se présente sous forme d'angle obtus et sous forme ondulée.
